# EUROPÄISCHE PATENTSCHRIFT

(11) **EP 1 248 084 B1**
(45) Veröffentlichungstag und Bekanntmachung des Hinweises auf die Patenterteilung: **31.05.2017**
(21) Anmeldenummer: 01108574.3
(22) Anmeldetag: 05.04.2001
(51) Int. Cl.: G01F 1/84

(54) **Coriolis-Massedurchfluss-Aufnehmer mit zwei gebogenen Messrohren**
Coriolis mass flow rate sensor with two curved measuring tubes
Capteur de débit massique selon Coriolis avec deux tubes courbés

(43) Veröffentlichungstag der Anmeldung: 09.10.2002
(73) Patentinhaber: Endress + Hauser Flowtec AG, 4153 Reinach BL 1 (CH)
(72) Erfinder: Koudal, Ole, 5400 Baden (CH); Wenger, Alfred, 8413 Neftenbach (CH)
(74) Vertreter: Andres, Angelika Maria

(56) Entgegenhaltungen:
- EP-A- 0 831 306
- US-A- 5 394 758
- US-A- 5 602 344
- US-A- 5 700 957

## Beschreibung

Die Erfindung betrifft einen Coriolis-Massedurchfluß-Aufnehmer mit zwei gebogenen Meßrohren.

Coriolis-Massedurchflussmesser werden vielfach zur Bestimmung des Massedurchflusses von Fluiden in Rohrleitungsabschnitten eingesetzt.
Als Meßaufnehmer dienen häufig zwei gebogene Meßrohre, die von dem zu messenden Fluid durchströmt werden und mittels einer Erregeranordnung in Schwingung versetzt werden. Die beiden Meßrohre sind in der Regel spiegelsymmetrisch zu einer Symmetrieebene einander gegenüberliegend angeordnet, wobei die Symmetrieebene zwischen den beiden Meßrohren liegt. Neben Meßaufnehmern mit zwei gebogenen Meßrohren sind auch Meßaufnehmer mit zwei geraden Meßrohren bzw. mit nur einem geraden oder gebogenen Meßrohr bekannt.

Die Meßrohre und das Fluid bilden zusammen ein schwingungsfähiges System, das normalerweise auf seiner Resonanzfrequenz angeregt wird. Die Resonanzfrequenz hängt unter anderem vom Material und den Abmessungen des Messrohrs ab. Sie variiert auch mit der Dichte des strömenden Fluids.
In einigen Fällen wird das Messrohr nicht auf der Resonanzfrequenz, sondern auf einer benachbarten Frequenz angeregt.
Zwei Schwingungssensoren erfassen die Schwingungsbewegung der Messrohre an zwei in Strömungsrichtung beabstandeten Stellen und wandeln die Schwingungsbewegung der Messrohre in Sensorsignale um. Beide Sensorsignale weisen die gleiche Frequenz wie die Schwingungsbewegung des Messrohrs auf, sie sind aber gegeneinander phasenverschoben.
Die Phasenverschiebung ist ein Maß für den Massedurchfluss.

Die Sensorsignale werden in einer Mess-Teilschaltung ausgewertet und in ein zum Massedurchfluss des Fluids proportionales Signal umgewandelt. Neben dem Massedurchfluss können auch weiter Eigenschaften des Fluids wie z. B. seine Dichte oder Viskosität bestimmt werden. Hierzu wird z. B. die Frequenz der Schwingungsbewegung des Messrohrs ausgewertet.
Bekannten Mess-Teilschaltungen arbeiten entweder analog wie z. B. in der EP-A698 783 bzw. der US- A 4895030 oder digital wie z. B. in der EP- A 702 212 bzw. der US A54 29 002
beschrieben.

Aus der US-A 5 394 758 ist ein Coriois-Massedurchflußaufnehmer mit zwei Meßrohren bekannt geworden, bei dem die Rohrenden durch zwei Koppelelemente miteinander verbunden sind. Zusätzlich ist noch eine weitere Verbindung der Meßrohre durch ein Koppelelement im Bereich des Rohrbogens vorgesehen. Weiterhin sind die beiden Schnittebenen der Meßrohre leicht gewinkelt zueinander angeordnet. Aufgrund dieser nicht parallelen Anordnung der Messrohre ist der Massedurchflußaufnehmer nur wenig empfindlich gegenüber mechanischen Störungen, insbesondere gegenüber Schocks oder Schwingungen, die aus der Rohrleitung stammen.

Auch bei dem in der US-A 5 700 957 offenbarten Massedurchflußmeßgerät sind Verbindungen zwischen den Meßrohren außerhalb der Rohrenden vorgesehen.

Ein weitere Ausgestaltung eines Durchflußmeßgeräts ist aus der US-A 5 602 344 bekannt geworden. Hier wird der Massedurchfluß durch die Rohrleitung unter zu Hilfenahme von zwei Differenzdrucksensoren ermittelt.

Die Güte des Meßergebnisses hängt u.a. davon ab, wie genau die Schwingungsbewegung der beiden Meßrohre erfaßt werden kann. Hierbei sind Störungen, die die Sensorsignale beeinflussen, so weit wie möglich zu vermeiden. Solche Störungen treten z.B. durch eine Schwingungskopplung des Meßaufnehmers mit der Prozeßumgebung auf, bei der Schwingungsenergie zwischen Meßaufnehmer und Prozeßumgebung ausgetauscht wird. So können Schwingungen aus der Prozeßumgebung über den Prozeßanschluß des Aufnehmers auf die beiden Meßrohre übertragen werden, die dann von den Sensoren aufgenommen und mit ausgewertet werden.
Ebenfalls störend wirken sich Reflektionen aus, die dadurch entstehen können, daß die Meßrohrschwingungen vom Aufnehmer über den Prozeßanschluß in die Prozeßumgebung weitergeleitet werden und von dort reflektiert werden können.
Zur Vermeidung dieser störenden Einflüsse sind bei den bekannten Aufnehmern, die beiden Meßrohre spiegelsymmetrisch und parallel einander gegenüberliegend angeordnet, so daß sich alle Schwingungskomponenten der Rohrschwingungen, die senkrecht zu dieser Spiegelebene liegen, kompensieren.
Dadurch daß die beiden Meßrohre jedoch nicht exakt parallel zueinander schwingen, sondern eine geringfügige Drehbewegung ausführen, treten auch Schwingungskomponenten in der Ebene der Spiegelebene auf, die nicht kompensiert sind und damit zu einer unerwünschten Schwingungskopplung des Meßaufnehmers mit der Prozeßumgebung führen.

Aufgabe der Erfindung ist es, einen Aufnehmer für einen Coriolis-Massedurchflußmesser anzugeben, der eine bessere Schwingungskompensation aufweist und der einfach und kostengünstig herstellbar ist.

Gelöst wird diese Aufgabe durch einen Coriolis-Massedurchfluss-Aufnehmer wie er in den Ansprüchen 1 und 3 beschrieben ist. Die wesentliche Idee der Erfindung liegt darin, daß durch die Schrägstellung der beiden Meßrohre Kräfte kompensiert werden, die in der Symmetrieebene liegen. Dadurch wird die Schwingungskopplung mit der Prozeßumgebung erheblich verringert und die Meßgenauigkeit erhöht.

In einer alternative Ausgestaltung der Erfindung weist ein Coriolis-Massedurchfluß-Aufnehmer zwei gebogenen Meßrohren, die spiegelsymmetrisch zu einer Symmetrieebene E einander gegenüberliegend parallel angeordnet sind und die im wesentlichen senkrecht zu der Symmetrieebene E in Schwingung versetzt werden, auf, wobei an den Rohrmitten jeweils Ausleger angeordnet sind, um in der Symmetrieebene liegende Kräfte, die an den Rohrenden auftreten, zu kompensieren.

In einer bevorzugten weiteren Ausgestaltung der Erfindung beträgt der Winkel α zwischen den Schnittebenen etwa 0.4°.

Nachfolgend ist die Erfindung anhand von zwei in der Zeichnung dargestellten Ausführungsbeispielen näher erläutert.

### Es zeigen:

Fig. 1 schematische Aufsicht eines erfindungsgemäßen ersten Coriolis-Massedurchfluß-Aufnehmers
Fig. 2a Prinzipskizze zur Erläuterung der Schwingungsbewegung bei einem Aufnehmer gemäß dem Stand der Technik
Fig. 2b Prinzipskizze zur Erläuterung der Schwingungsbewegung bei einem Coriolis-Massedurchfluß-Aufnehmer gemäß Fig.1
Fig. 3 schematische Aufsicht eines erfindungsgemäßen zweiten Coriolis-Massedurchfluß-Aufnehmers

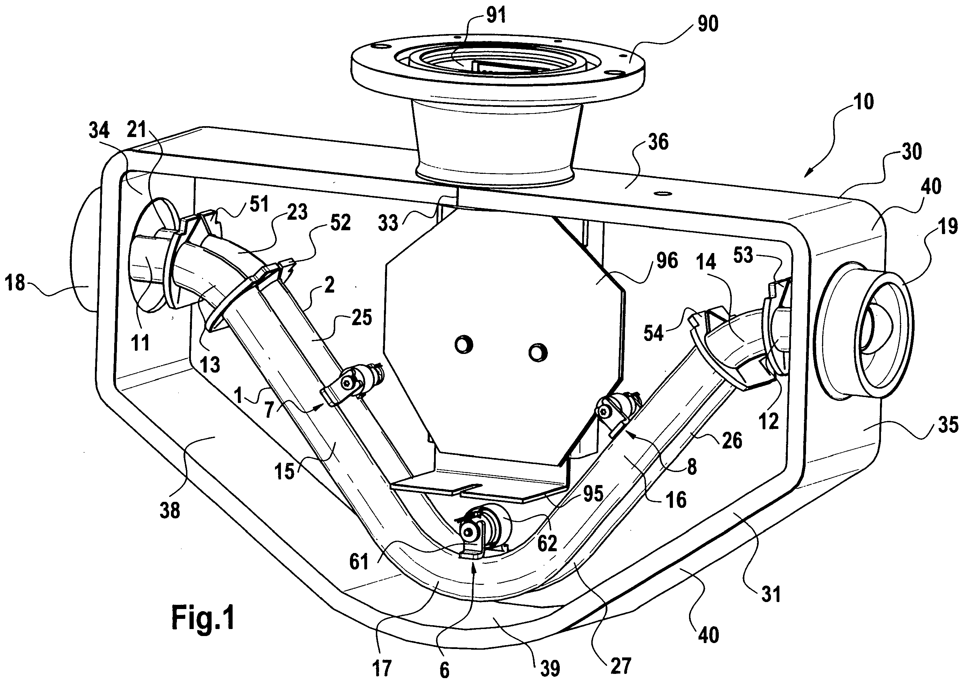

Fig. 1 zeigt eine schematische Aufsicht eines ersten erfindungsgemäßen Coriolis-Massedurchfluß-Aufnehmers, der im folgenden als Aufnehmer 10 bezeichnet wird.

Der Aufnehmer 10 weist ein in einer ersten Schnittebene L1 in etwa V-förmig gebogenes Meßrohr 1 auf, das bezüglich einer ersten Symmetrielinie symmetrisch gebogen ist.
Ein V-förmiges gebogenes zweites Meßrohr 2 mit einer Schnittebene L2 ist spiegelsymmetrisch bezüglich einer Symmetrieebene E zum Meßrohr 1 angeordnet.
Die Symmetrieebene E liegt mittig zwischen den beiden Meßrohren 1, 2.

Beide Meßrohre 1 und 2 sind einstückig ausgebildet.

Das Meßrohr 1 weist ein gerades Einlaßstück 11 auf, das mit einem geraden Auslaßstück 12 fluchtet.

Das Meßrohr 2 weist ebenfalls ein gerades Einlaßstück 21 auf, das mit einem entsprechenden geraden Auslaßstück 22 fluchtet.

An das gerade Einlaßstück 11 des Meßrohrs 1 schließt ein Einlaßbogen 13 an, der in ein gerades Rohrstück 15 übergeht. Das gerade Rohrstück 15 geht in einen Scheitelbogen 17 über an den sich ein weiters gerades Rohrstück 16 anschließt, von dem ein Auslaßbogen 14 zum geraden Auslaßstück 12 führt.

Das Meßrohr 2 ist entsprechend dem Meßrohr 1 aufgebaut.
An das gerade Einlaßstück 21 des Meßrohrs 2 schließt ein Einlaßbogen 23 an, der in ein gerades Rohrstück 25 übergeht. Das gerade Rohrstück 25 geht in einen Scheitelbogen 27 über an den sich ein weiters gerades Rohrstück 26 anschließt, von dem ein Auslaßbogen 24 zum geraden Auslaßstück 22 führt. Beide Meßrohre 1, 2 sind einlaßseitig über zwei Koppelelemente 51, 52 und auslaßseitig über zwei Koppelelemente 53, 54 miteinander verbunden.

Die Einlaßstücke 11, 21 sind in einem Einlaßverteilerstück 18 und die Auslaßstücke 12, 22 in einem Auslaßverteilerstück 19 fixiert. Beide Verteilerstücke 18, 19 sind in einem Tragrahmen 30 gehaltert, der Teil eines nicht näher dargestellten Gehäuses ist.

Die Meßrohre 1, 2 sowie die Versteilerstücke 18, 19 bestehen im Ausführungsbeispiel aus rostfreiem Stahl.

Im Betrieb ist der Aufnehmer 10 über einen Prozeßanschluß in einen nicht dargestellten Rohrleitungsabschnitt integriert.
Diese Rohrleitungen unterscheiden sich kundenspezifisch, so daß der Meßaufnehmer 10 unterschiedliche Verbindungsvorrichtungen ( Gewindestutzen, Flansche oder Klemmvorrichtungen) als Prozeßanschlüsse aufweisen kann.

Ebenso wie die Meßrohre 1, 2 ist der Tragrahmen 30 einstückig ausgebildet.

Der Tragrahmen 30 ist vorder- und rückseitig mit jeweils einem nicht dargestellten Blech verschweißt, so daß sich die beiden Meßrohre in einem luftdicht abgeschlossenen Gehäuse befinden.

Mit Hilfe einer nicht näher dargestellten bekannten Erregeranordnung 6, die an den Scheitelbögen 17, 27 fixiert ist, werden die beiden Meßrohre 1, 2 in eine stimmgabel-artige Schwingung versetzt, mit einer Schwingfrequenz, die der Resonanzfrequenz des Systems Meßrohr 1, 2 einschließlich des sich in den beiden Meßrohren befindlichen Fluids entspricht. Teilweise liegt die Schwingfrequenz auch etwas neben der Resonanzfrequenz des Systems.

Die Resonanzfrequenz des Systems hängt von der Dichte des Fluids ab. Daher kann über die Resonanzfrequenz die Dichte des Fluids bestimmt werden.

Die Erregeranordnung 6 wird von einer nicht dargestellten Treiberschaltung über eine Versorgungsleitung 63 mit Wechselenergie versorgt, die z. B. eine immer die momentane Resonanzfrequenz des Systems einstellende PLL-Schaltung entsprechend er US- 48 01 897 sein kann.

Zur Aufnahme der Schwingungsbewegung der beiden Meßrohre 1, 2 dienen zwei Weg- oder Geschwindigkeitssensoren 7, 8, die jeweils an den geraden Rohrstücken 15, 25 bzw. 16, 26 fixiert sind und über Verbindungsleitungen 73, 83 mit einer nicht dargestellten Meß-Teilschaltung verbunden.

Die Signalauswertung ist nicht Gegenstand der Erfindung, so daß auf die genauere Darstellung einer Meß-Teilschaltung verzichtet wird. Derartige Schaltungen sind z.B. in den Druckschriften EP- A698 783, US- A 4895030, EP- A 702 212 bzw. US A54 29 002 beschrieben.

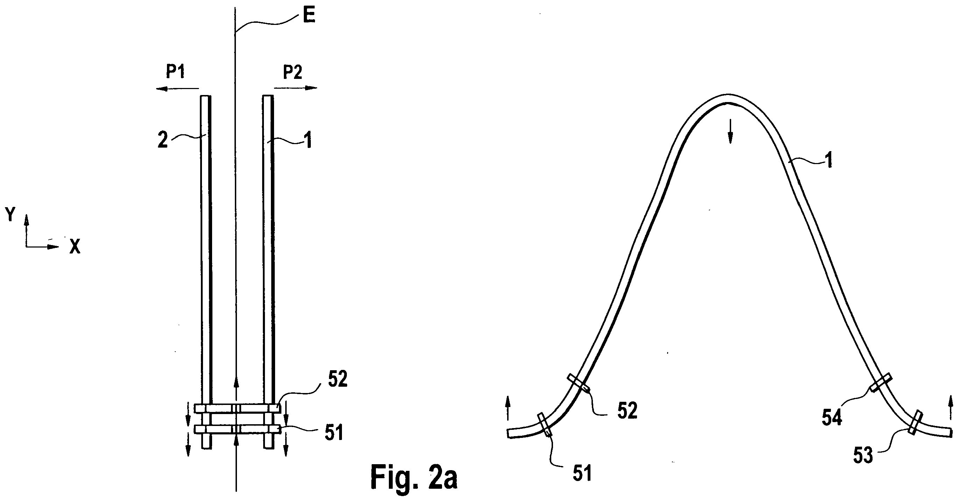

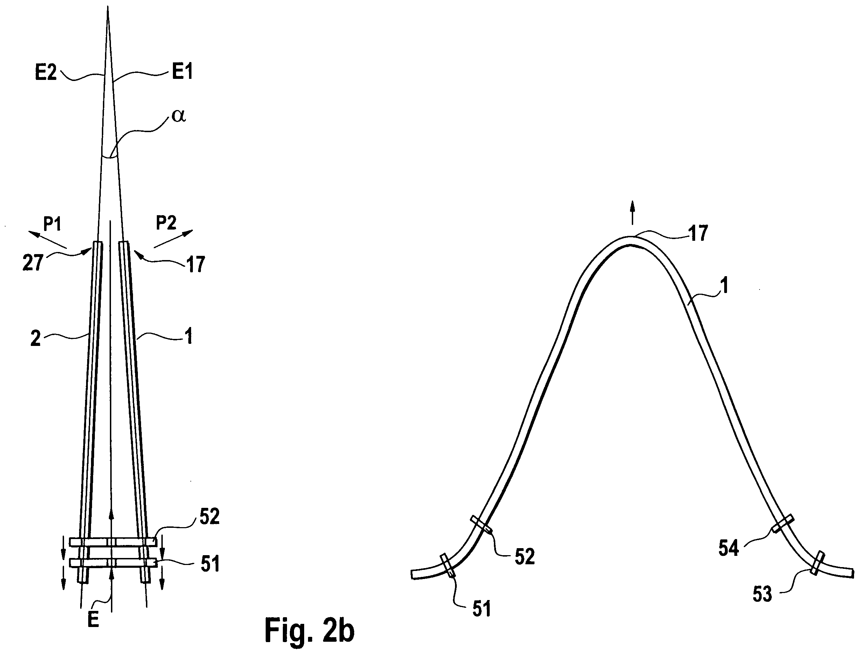

Fig. 2 a zeigt eine Prinzipskizze zur Erläuterung der Schwingungsbewegung bei einem Aufnehmer gemäß dem Stand der Technik mit zwei parallelen Meßrohren. Entsprechende Teile in Fig. 2 werden entsprechend Fig. 1 beziffert.

In Seitenansicht dargestellt sind in vereinfachter Form zwei parallel angeordnete Meßrohre 1,2, deren Enden jedoch nicht fixiert sind sondern frei schwingen können und die über zwei Koppelelemente 51, 52 miteinander verbunden sind. Alle unwesentlichen Teile sind der Übersicht halber nicht dargestellt.

Anhand frei schwingender Enden läßt sich die Idee der Erfindung besser erläutern.
Im Betrieb schwingen die beiden Meßrohre 1, 2 relativ zueinander. Die durch Pfeile P1, P2 dargestellte Auslenkung der Scheitelbögen 17, 27 wird von der nicht dargestellten Erregeranordnung 6 erzeugt. Der wesentliche Anteil der Schwingungsamplitude liegt in x-Richtung. Ein geringerer Anteil der Schwingungsamplitude liegt aber auch in y-Richtung.
Die Kraft der Erregeranordnung 6 wird über die Meßrohre 1, 2 zu den Koppelelementen 51, 52 übertragen. Die Koppelelemente 51, 52 verformen sich in der dargestellten Weise. Die Mitten der Koppelelemente 51, 52 bewegen sich in y-Richtung, während die äußeren Enden sich entgegengesetzt in -y-Richtung bewegen.
Gleichzeitig bewegen sich die Enden der Meßrohr 1, 2 in y-Richtung. Dies ist entsprechenden Aufsicht auf ein Meßrohr 1 bzw. 2 deutlicher zu sehen. Diese Bewegung in y-Richtung führt im fixierten Zustand der Meßrohrenden zu einer Kraft auf die Versteilerstücke 18 bzw. 19.

Fig. 2b zeigt eine entsprechende Prinzipskizze für einen Aufnehmer gemäß Fig. 1. Dieser Aufnehmer unterscheidet sich von dem Aufnehmer gemäß Fig. 2a nur durch die Schrägstellung der Meßrohre.
Aufgrund der Schrägstellung der beiden Meßrohre 1, 2 bewegen sich die Scheitelbögen 17, 27 bei der Schwingungsbewegung etwas in y-Richtung. Diese y-Bewegung kompensiert die entsprechende -y-Bewegung der Rohrenden, so daß die Rohrenden im Prinzip ortsfest verharren.
Im fixierten Zustand der Rohrenden wirkt deshalb keine Kraft auf die Verteilerstücke (18, 19).
Dadurch wird die Kopplung des Meßaufnehmers 10 mit der Prozeßumgebung erheblich verringert.

In Fig. 2a bzw. Fig. 2b sind die Auslenkungen zur Verdeutlichung übertrieben dargestellt.

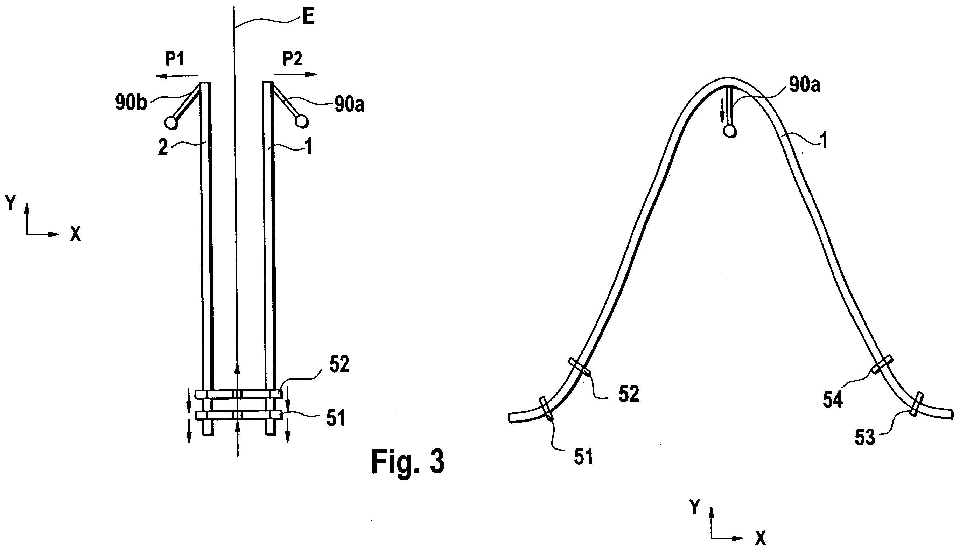

In Fig. 3 ist eine schematische Aufsicht eines zweiten erfindungsgemäßen Coriolis-Massedurchfluß-Aufnehmers dargestellt. Dieser Aufnehmer 10' unterscheidet sich von dem Aufnehmer 10 gemäß Fig. 1 nur dadurch, daß die beiden Meßrohre 1, 2 parallel zueinander angeordnet sind und daß jeweils an den Scheitelbögen 17, 27 jeweils Ausleger 90a, 90b angeordnet sind, die bei der Schwingungsbewegung der Meßrohre 1, 2 eine Bewegungskomponente in der Symmetrieebene erzeugen, die der Bewegung der freien Rohrenden entgegenwirkt. Dadurch wird die Schwingungsbewegung der Rohrenden verringert.
Im fixierten Zustand der Rohrenden wirkt keine Kraft auf die Verteilerstücke 18,19.
Dadurch wird die Kopplung des Meßaufnehmers 10' mit der Prozeßumgebung auch in diesem Fall erheblich verringert.

Die Vorteile der Erfindung wurden auch durch FEM-Berechnungen sowie entsprechende Versuche verifiziert.

## Patentansprüche

1. Coriolis-Massedurchfluss-Aufnehmer mit zwei gebogenen Messrohren (1, 2), die spiegelsymmetrisch zu einer Symmetrieebene € einander gegenüberliegend angeordnet sind und die im wesentlichen senkrecht zu der Symmetrieebene in Schwingung versetzt werden, wobei die Rohrenden der Messrohre (1, 2) über Koppelelemente (51, 52, 53, 54) miteinander verbunden sind, **dadurch gekennzeichnet, dass** die beiden Messrohre so angeordnet sind, dass ihre Schnittebenen (E1, E2) einen Winkel α, der größer als Null und kleiner 3° ist, einschließen, um in der Symmetrieebene liegende Kräfte, die an den Rohrenden auftreten zu kompensieren.

2. Coriolis-Massedurchfluß-Aufnehmer nach Anspruch 1, **dadurch gekennzeichnet, daß** der Winkel α 0.4° beträgt.

3. Coriolis-Massedurchfluß-Aufnehmer mit zwei gebogenen Meßrohren (1, 2), die spiegelsymmetrisch zu einer Symmetrieebene E einander gegenüberliegend angeordnet sind und die im wesentlichen senkrecht zu der Symmetrieebene E in Schwingung versetzt werden, **dadurch gekennzeichnet, daß** an **den Scheitelbögen (17, 27) der Meßrohre (1, 2)** jeweils Ausleger ( 90a, 90b) angeordnet sind, um in der Symmetrieebene E liegende Kräfte, die an den Rohrenden auftreten, zu kompensieren

## Claims

1. Coriolis mass flowmeter with two curved measuring tubes (1,2), which are arranged opposite one another in mirror symmetry to a plane of symmetry E and which are set to vibrate essentially perpendicularly to the plane of symmetry, wherein the ends of the measuring tubes (1, 2) are interconnected via coupling elements (51, 52, 53, 54), **characterized in that** the two measuring tubes are arranged in such a way that their section planes (E1, E2) includes an angle α which is greater than zero and less than 3° in order to compensate for forces in the plane of symmetry that occur at the ends of the tubes.

2. Coriolis mass flowmeter as claimed in Claim 1, **characterized in that** the angle α is 0.4 °.

3. Coriolis mass flowmeter with two curved measuring tubes (1,2), which are arranged opposite one another in mirror symmetry to a plane of symmetry E and which are set to vibrate essentially perpendicularly to the plane of symmetry E, **characterized in that** arms (90a, 90b) are arranged at the height of the curve (17, 27) of the measuring tubes (1, 2) in order to compensate for forces in the plane of symmetry E that occur at the ends of the tubes.

## Revendications

1. Débitmètre Coriolis avec deux tubes de mesure coudés (1,2),qui sont disposés à l'opposé l'un de l'autre selon une symétrie spéculaire par rapport à un plan de symétrie E et qui sont mis en vibration pour l'essentiel perpendiculairement au plan de symétrie, les extrémités des tubes de mesure (1, 2) étant reliées entre elles par l'intermédiaire d'éléments de couplage (51, 52, 53, 54), **caractérisé en ce que** les deux tubes de mesure sont disposés de telle sorte que leurs plans de coupe (E1, E2) définissent un angle α supérieur à zéro et inférieur à 3°, afin de compenser les forces situées dans le plan de symétrie et apparaissant aux extrémités des tubes.

2. Débitmètre Coriolis selon la revendication 1, **caractérisé en ce que** l'angle α est égal à 0,4 °.

3. Débitmètre Coriolis avec deux tubes de mesure coudés (1,2),qui sont disposés à l'opposé l'un de l'autre selon une symétrie spéculaire par rapport à un plan de symétrie E et qui sont mis en vibration pour l'essentiel perpendiculairement au plan de symétrie E, **caractérisé en ce que** sont disposés, au niveau des coudes (17, 27) des tubes de mesure (1, 2), des bras (90a, 90b) afin de compenser les forces situées dans le plan de symétrie E et apparaissant aux extrémités des tubes.
